**Europäisches Patentamt**

**European Patent Office**

**Office européen des brevets**

(19)

(11) Numéro de publication: **0 097 569 B1**

## FASCICULE DE BREVET EUROPEEN

(12)

(45) Date de publication du fascicule du brevet: **16.09.87**

(51) Int. Cl.⁴: **B 23 K 11/32,** B 21 F 27/20

(21) Numéro de dépôt: **83401172.8**

(22) Date de dépôt: **09.06.83**

(54) **Dispositif de fabrication d'armatures pour béton armé.**

(30) Priorité: **23.06.82 FR 8211001**

(43) Date de publication de la demande:
**04.01.84 Bulletin 84/1**

(45) Mention de la délivrance du brevet:
**16.09.87 Bulletin 87/38**

(84) Etats contractants désignés:
**AT CH DE GB IT LI SE**

(56) Documents cités:
**DE - A - 2 205 852**
**DE - A - 2 928 436**
**DE - B - 1 143 946**
**FR - A - 2 080 821**
**LU - A - 39 607**

(73) Titulaire: **PROFER, 107 Boulevard Malesherbes, F-75008 Paris (FR)**

(72) Inventeur: **de Bentzmann, Bertrand Louis, Braguèze, F-47800 Roumagne (FR)**

(74) Mandataire: **Hasenrader, Hubert et al, Cabinet BEAU DE LOMENIE 55, rue d'Amsterdam, F-75008 Paris (FR)**

## Description

La présente invention a pour objet un dispositif de fabrication d'armatures pour béton armé constituées de filants réunis par des éléments transversaux en fil.

Actuellement, la fabrication des armatures est réalisée soit manuellement, soit mécaniquement en assemblant des éléments transversaux ou cadres déjà réalisés séparément avec des filants.

Un autre procédé consiste à réaliser un produit plat tel qu'un grillage dont les filants constituent la trame et qu'on plie ensuite autour desdits filants.

Dans la documentation antérieure connue, il existe également des machines réalisant automatiquement un cadre autour des filants, ledit cadre étant soudé ultérieurement sur les filants.

On connaît par le document DE-B-1 143 946 un dispositif comportant un organe mobile supportant à la fois un moyen de soudure électrique par résistance et un moyen de formage, capable, au cours d'un même mouvement, d'effectuer simultanément des opérations de soudure et de formage de deux fils l'un avec l'autre. Malheureusement, ce dispositif exige une contre-électrode située par rapport aux fils soudés, de l'autre côté dudit organe mobile, ce qui en rend l'utilisation difficile pour fabriquer des armatures classiques, car il faut concevoir des moyens pour installer et déplacer les contre-électrodes à l'intérieur de l'armature.

L'invention vise à proposer un dispositif spécialement adapté à la fabrication des armatures.

A cet effet, le dispositif de l'invention du type susdécrit comprend, pour chacun des filants sur lequel doit être soudé un élément transversal, un organe de support mobile situé à l'extérieur de l'armature et d'un même côté de l'élément transversal, ledit organe de support étant muni d'une électrode unique de soudure électrique susceptible de venir en contact avec le fil de l'élément transversal et d'une barre portant à l'une de ses extrémités un galet de formage susceptible de venir en contact avec l'élément transversal et de conformer celui-ci lors du déplacement du galet et de l'organe de support, des moyens étant prévus pour relier l'électrode et les filants aux phases respectives d'un circuit d'alimentation électrique.

Cette disposition suivant l'invention permet de simplifier le dispositif de formage et d'assemblage et d'augmenter la cadence de fabrication des armatures pour béton armé.

D'autres caractéristiques et avantages de l'invention seront mieux compris à la lecture de la description qui va suivre d'un mode de réalisation et en se référant aux dessins annexés, sur lesquels:

– la figure 1 est une vue en perspective d'une armature pour béton armé montrant les différentes phases de réalisation des éléments transversaux ou cadres;

– la figure 2 est une vue en coupe transversale d'une armature et du dispositif de fabrication d'armatures suivant une réalisation de l'invention;

– la figure 3 est une vue en élévation d'une tête de formage et de soudure;

– la figure 4 est une vue de détail montrant la soudure des extrémités d'un élément transversal ou cadre;

– les figures 5, 6 et 7 sont des vues en élévation de plusieurs modes d'assemblage par soudure des extrémités d'un élément transversal.

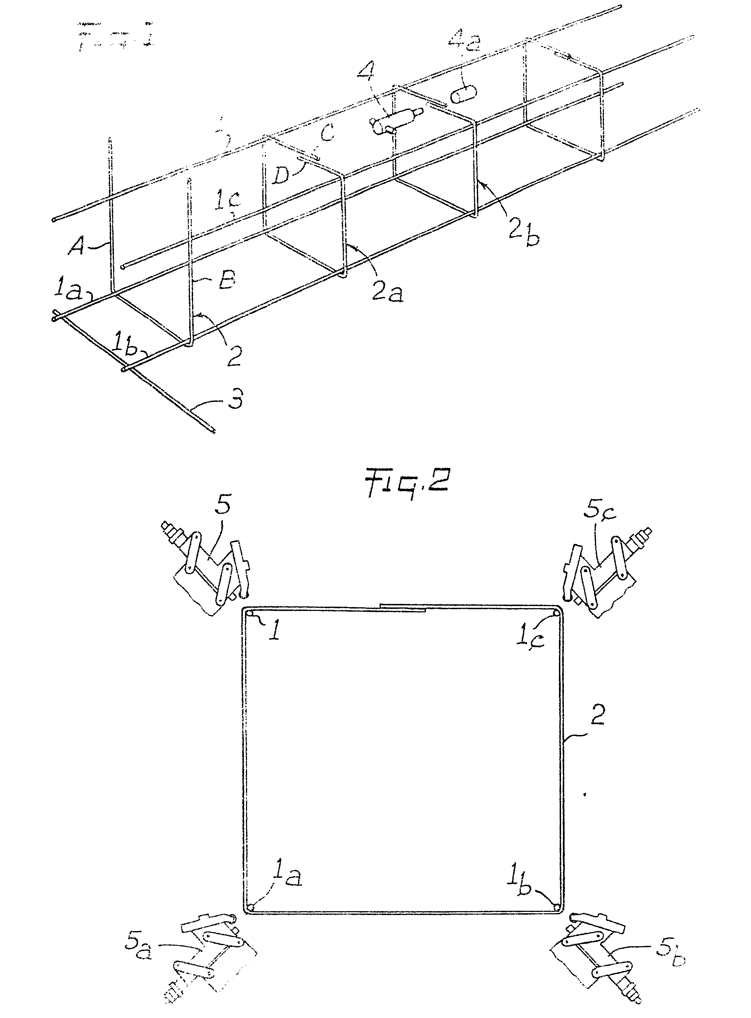

A la figure 1, on a représenté une armature pour béton armé qui est constituée de filants 1 qui sont réunis par des éléments transversaux ou cadres 2, 2a, 2b en fil conformés et soudés sur les filants. Pour procéder à la fabrication d'une telle armature, les filants 1 sont fixes et on utilise des moyens de formage et de soudage qui sont montés de façon mobile sur un portique de support.

Au cours d'une première opération, un élément de fil 3 est disposé sous les filants inférieurs 1a, 1b (figure 1), de telle sorte que, au cours d'une deuxième opération, l'élément transversal 2 a ses deux branches A et B qui sont repliées verticalement autour des filants inférieurs 1a, 1b et viennent en contact avec les filants supérieurs 1, 1c. Simultanément, l'élément transversal 2 est soudé sur les filants inférieurs 1a, 1b. Au cours d'une troisième opération (figure 1), les branches A et B de l'élément transversal 2 sont repliées horizontalement autour des filants supérieurs 1, 1c et soudés sur lesdits filants afin que les extrémités C et D soient disposées en regard et que l'élément transversal prenne la forme représentée en 2a. Au cours d'une quatrième opération, les extrémités C et D de l'élément transversal 2b sont disposées entre deux électrodes 4, 4a qui assurent la soudure dudit élément transversal pour former un cadre.

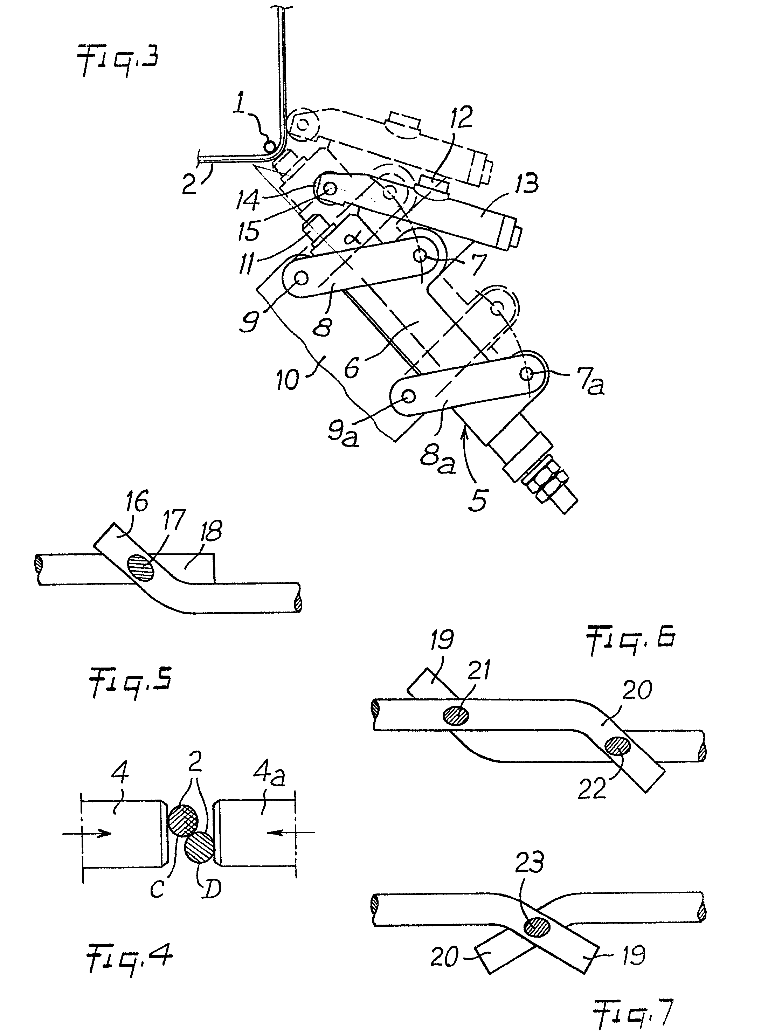

Pour parvenir à ce résultat, il est prévu à chaque angle de l'armature en regard des filants 1, 1a, 1b, 1c des têtes de formage de soudure 5, 5a, 5c (figure 2) qui sont montées sur un portique non représenté au dessin et qui permet d'amener sélectivement les têtes d'usinage 5 à 5c en regard des parties de l'élément transversal 2 qu'il est nécessaire de conformer et de souder sur les filants.

L'une de ces têtes 5 représentée plus en détail à la figure 3 est constituée d'un organe de support 6 qui présente deux axes 7, 7a autour desquels sont montés pivotants par l'une de leurs extrémités de leviers parallèles 8, 8a qui sont articulés par leur autre extrémité autour d'axes 9, 9a sur un bâti 10 solidaire d'un élément d'un portique non représenté au dessin.

A l'une de ses extrémités, l'organe de support 6 comporte une électrode 11 de soudure électrique par résistance reliée par un câble à l'une des phases d'un circuit d'alimentation électrique dont l'autre phase est reliée à l'un des filants. Sur l'organe de support 6 est fixée, au moyen de vis 12, une barre 13 dont l'axe est incliné d'un angle α par rapport à l'axe de l'électrode 11, ladite barre portant à l'une de ses extrémités un galet de formage 14 monté en rotation libre sur un axe 15 solidaire de ladite barre.

Cette disposition de l'organe de support 6 articulé sur le bâti 10 au moyen des leviers parallèles 8, 8a permet à celui-ci et aux organes de formage 14 et de soudure 11 d'effectuer un déplacement suivant une trajectoire en arc de cercle pour adopter la position représentée en trait interrompu à la figure 3.

Au cours de ce déplacement, le galet 14 qui est en contact au départ avec la partie rectiligne du fil de l'élément transversal 2 provoque le pliage dudit fil autour du filant 1 pour amener le fil de l'élément transversal dans la position représentée à la figure 3.

Par ailleurs, l'électrode 11 qui, au départ, est hors de contact, se déplace avec le galet 14 et vient en contact en fin de course avec le fil de l'élément transversal 2 afin d'assurer la soudure au point de contact entre le filant 1 et l'élément transversal 2. Cette disposition permet au cours d'un même mouvement de la tête 5 suivant la flèche F d'effectuer simultanément les opérations de formage de l'élément transversal 2 et de soudure de l'élément transversal sur la filant 1.

Comme représenté aux figures 1 et 4, les extrémités C et D de l'élément transversal 2 sont soudées électriquement au moyen de deux électrodes 4, 4a qui viennent en appui contre les deux extrémités de l'élément transversal 2.

Suivant le mode de réalisation de la figure 5, l'une des extrémités du fil 16 est repliée d'un angle déterminé par rapport à l'axe du fil et cette partie repliée 16 est soudée en 17 sur l'autre extrémité rectiligne du fil 18.

A la figure 6, les deux extrémités 19 et 20 sont également repliées comme dans le cas précédent et les parties repliées 19 et 20 sont soudées en 21, 22 sur la partie rectiligne de l'autre extrémité du fil.

Dans le mode de réalisation de la figure 7, les extrémités repliées 19, 20 du fil de l'élément transversal sont soudées l'une sur l'autre en un seul point 23.

**Revendications**

1. Dispositif de fabrication d'armatures pour béton armé constituées de filants (1, 1a, 1b, 1c) réunis par des éléments transversaux (2) en fil, du type qui comprend au moins un organe mobile (6) supportant à la fois un moyen de soudure électrique par résistance (11) et un moyen de formage (13, 14) et qui au cours d'un même mouvement, effectuent simultanément des opérations de formage et de soudure, caractérisé en ce qu'il comprend, pour chacun des filants (1, 1a, 1b, 1c) sur lequel doit être soudé un élément transversal (2), un organe de support (6) mobile situé à l'extérieur de l'armature et d'un même côté de l'élément transversal, ledit organe de support étant muni d'une électrode (11) unique de soudure électrique susceptible de venir en contact avec le fil de l'élément transversal (2) et d'une barre (13) portant à l'une de ses extrémités un galet de formage (14) susceptible de venir en contact avec l'élément transversal (2) et de conformer celui-ci lors du déplacement du galet (14) et de l'organe de support (6), des moyens étant prévus pour relier l'électrode et les filants aux phases respectives d'un circuit d'alimentation électrique.

2. Dispositif suivant la revendication 1, caractérisé en ce que l'organe de support (6) est monté de façon articulée sur un bâti (10) par deux leviers parallèles (8, 8a) qui confèrent à l'organe de support (6) et aux moyens de formage (14) et de soudure (11) une translation suivant un arc de cercle.

3. Dispositif suivant l'une des revendications 1 ou 2, caractérisé en ce que les extrémités du fil de l'élément transversal (2) sont soudées l'une contre l'autre entre deux électrodes (4, 4a) additionnelles associées aux organes de support (6), l'une des extrémités du fil présentant une partie repliée (16) d'un angle déterminé par rapport à l'axe du fil et qui est soudée sur l'autre extrémité (18) du fil.

4. Dispositif suivant la revendication 3, caractérisé en ce que les deux extrémités du fil présentent une partie repliée (19, 20) qui est soudée par les électrodes additionnelles (4, 4a) sur la partie rectiligne de l'autre extrémité du fil.

5. Dispositif suivant la revendication 3, caractérisé en ce que les extrémités du fil présentent des parties repliées (19, 20), qui sont soudées (en 23), l'une sur l'autre par les deux électrodes (4, 4a) additionnelles.

**Claims**

1. Device for producing reinforcements for use in reinforced concrete constituted of longitudinal elements (1, 1a, 1b, 1c) joined by transverse wire elements (2), of the type comprising a movable member (6) supporting both a resistance-welding member (11) and a shaping member (13, 14) and which during a same movement, perform the operations of shaping and welding simultaneously, characterized in that it comprises, for each longitudinal element (1, 1a, 1b, 1c) on which a transverse element (2) is to be welded, a movable support member (6) situated outside of the frame and on the same side of the transverse element (2), said support member being provided with a single resistance-welding electrode (11) capable to come in contact with the wire of the transverse element (2) and of a bar (13) carrying at one of its ends a shaping roller (14) adapted to come in contact with the transverse element (2) and to carry out the shaping thereof during a movement of said roller (14) and of the support member (6), means being provided to connect the electrode and the longitudinal elements to the respective phases of an electrical supply circuit.

2. Device according to claim 1, characterized in that the support member (6) is pivotally mounted on a structure (10) via two parallel levers (8, 8a) which enable the support member (6), and the shaping roller (14) and welding member (11) to move along an arcuate path.

3. Device according to any one of claims 1 or 2, characterized in that the ends of the wire of the transverse element (2) are welded one against the other between two additional electrodes (4, 4a) associated with the support members (6), one of the ends of the wire (16) having a folded part (16) forming a predetermined angle with the axis of the wire, and the folded part is welded on the other end (18) of the wire.

4. Device according to claim 3, characterized in that the two ends of the wire have a folded part (19, 20) which is welded by the additional electrodes (4, 4a) on the straight part of the other end of the wire.

5. Device according to claim 3, characterized in that the ends of the wire have folded parts (19, 20) which are welded (in 23), one on the other by the two additional electrodes (4, 4a).

**Patentansprüche**

1. Vorrichtung zur Herstellung einer Stahlbetonarmierung, bestehend aus Drähten (1, 1a, 1b, 1c), vereinigt durch Querelemente (2) aus Draht, von dem Typus, der zumindest ein mobiles Organ (6) aufweist, welches sowohl ein elektrisches Widerstandsschweissmittel (11) als auch ein Formmittel (13, 14) trägt und welches im Zuge einer Bewegung simultan Formung und Schweissung durchführt, dadurch gekennzeichnet, dass es für jeden der Drähte (1, 1a, 1b, 1c), auf den ein Querelement (2) geschweisst werden soll, ein mobiles Stützorgan (6) aufweist, das auf der Aussenseite der Armierung und auf derselben Seite, wie das Querelement angeordnet ist, wobei das Tragelement mit einer einzigen elektrischen Schweisselektrode (11) ausgerüstet ist, die in der Lage ist, in Kontakt mit dem Draht des Querelementes (2) zu kommen und mit einer Stange (13), die an einem ihrer Enden ein Formrolle (14) trägt, die in der Lage ist, in Kontakt mit dem Querelement (2) zu gelangen und es während der Bewegung der Rolle (14) und des Tragelements (6) zu formen, wobei Mittel vorgesehen sind, die die Elektrode und die Drähte entsprechend mit Phasen einer elektrischen Versorgung zu verbinden.

2. Vorrichtung nach Anspruch 1, dadurch gekennzeichnet, dass das Tragelement (6) beweglich auf einem Stab (10) mittels zweier paralleler Winkel (8, 8a) befestigt ist, die es ermöglichen, das Tragorgan (6), die Formmittel (14) und die Schweissmittel (11) entlang eines Kreisbogens zu bewegen.

3. Vorrichtung nach einem der Ansprüche 1 oder 2, dadurch gekennzeichnet, dass die Enden des Drahtes des Querelementes (2) zwischen zwei Elektroden (4, 4a), die dem Tragorgan (6) zusätzlich zugeordnet sind, miteinander verschweisst werden, wobei eines der Enden des Drahtes einen gebogenen Teil (16) mit einem gegenüber der Drahtachse vorbestimmten Winkel aufweist und mit dem anderen Ende (18) des Drahtes verschweisst wird.

4. Vorrichtung nach Anspruch 3, dadurch gekennzeichnet, dass die beiden Enden des Drahtes einen gebogenen Teil (19, 20) aufweisen, der durch die zusätzlichen Elektroden (4, 4a) mit dem geraden Teil des anderen Endes des Drahtes verschweisst wird.

5. Vorrichtung nach Anspruch 3, dadurch gekennzeichnet, dass die Drahtenden gebogene Teile (19, 20) aufweisen, die (bei 23) durch die zusätzlichen Elektroden (4, 4a) miteinander verschweisst werden.

Fig. 1

Fig.2

Fig.3

Fig.5

Fig.4

Fig.6

Fig.7